# EUROPEAN PATENT SPECIFICATION

(11) **EP 3 224 315 B1**
(45) Date of publication and mention of the grant of the patent: **27.10.2021**
(21) Application number: 15862434.6
(22) Date of filing: 27.11.2015
(51) Int. Cl.: C08L 9/00, B60C 1/00, C08K 3/00, C08K 3/04, C08K 3/24, C08L 7/00, C08L 91/00, C08K 3/30

(54) **A RUBBER COMPOSITION**
KAUTSCHUKZUSAMMENSETZUNG
COMPOSITION DE CAOUTCHOUC

(30) Priority: 28.11.2014 WO PCT/JP2014/082345
(43) Date of publication of application: 04.10.2017
(73) Proprietor: Compagnie Générale des Etablissements Michelin, 63000 Clermont-Ferrand (FR); Michelin Recherche et Technique S.A., 1763 Granges-Paccot (CH)
(72) Inventor: FUKASAWA, Hiroko, Tokyo 163-1073 (JP)
(74) Representative: Regimbeau
(86) International application number: PCT/JP2015/084084
(87) International publication number: WO 2016/084984

(56) References cited:
- EP-A1- 2 629 986
- WO-A1-2013/152980
- JP-A- 2013 545 835
- US-A- 5 252 649
- US-A- 5 252 649

## Description

### 1. FIELD OF THE INVENTION

The invention relates to rubber compositions which can be used in particular as tread(s) for "winter tire(s)" capable of rolling over ground surfaces covered with ice or black ice without being provided with studs (also known as studless tires), while at least maintaining or even improving a grip on wet.

It relates more particularly to treads for winter tires specifically suited to rolling under "melting ice" conditions encountered within a temperature range typically of between -5°C and 0°C.

It should specifically be remembered that, within such a range, the pressure of the tires during the passage of a vehicle brings about surface melting of the ice, which is covered with a thin film of water harmful to a grip of these tires on the melting ice.

### 2. BACKGROUND

Patent application WO 2013/152980 describes a rubber composition usable as a tread of a tire, based on at least one diene elastomer, more than 30 phr of a liquid plasticizing agent, between 50 and 150 phr of a reinforcing filler, between 2 and 40 phr of microparticles of potassium sulfate, characterized in that the volumetric size of said microparticles distribution satisfies specific relationships. Patent application EP 2 629 986 A1 describes a rubber composition that can be used as a tire tread having improved adhesion on melting ice, comprising at least one diene elastomer such as natural rubber and/or a polybutadiene, more than 30 phr of a liquid plasticizer, between 50 and 150 phr of a reinforcing filler such as silica or carbon black, and between 2 and 40 phr of microparticles of a water-soluble sulfate of an alkali or alkali earth metal such as a magnesium sulfate, wherein said composition is characterized in that the volumetric microparticle size distribution, specific relations. US 5 252 649 A describes a pneumatic vehicle tire comprising a tread member comprising a tread member rubber mixture including a plasticizer; said plasticizer comprising at least one fatty acid triglyceride, said fatty acid triglyceride comprising oleic acid in a amount of more than 50% of the total fatty acids.

Patent applications WO 2010/0009850 and WO 2012/052331 filed by the applicants describe a specific rubber composition capable of generating an effective surface microroughness by virtues of specific microparticles and which makes it possible to improve the grip on ice of the treads and tires comprising them under melting ice conditions without being disadvantageous to the properties of reinforcement and hysteresis.

These microparticles, which protrude at the surface of the tread, perform a claw function well known without a disadvantage of being abrasive action on the surfacing of the ground surface itself and without a significantly deteriorated road behavior on a dry ground surface. Then, subsequently, after gradual expulsion from the rubber matrix, they release microcavities which act as storage volume and as channel for draining the film of water at the surface of the ice; under these conditions, the contact between the surface of the tread and the ice is no longer lubricated and the coefficient of friction is thus improved.

There is a constant objective of tire manufacturers to moreover improve the grip on ice, especially under melting ice, without however deteriorating a grip on wet which is one of essential tire performances.

### 3. BRIEF DESCRIPTION OF THE INVENTION

On continuing their research, the inventors have discovered a novel rubber composition that comprises a specific combination of plasticizer and water soluble sulfate particles which makes it possible to improve the grip on ice of the treads and tires comprising them under melting ice conditions, while at least maintaining or even improving the wet grip, that is the grip on wet roads.

Thus, the invention is as follows.
[1] A rubber composition comprising at least:
   - a diene elastomer;
   - between 70 and 150 phr of a reinforcing filler;
   - between 20 and 160 phr of a plasticizer comprising from 20 to 55 phr of a vegetable oil; and
   - between 2 and 40 phr of microparticles of a water soluble sulfate of an alkali metal or an alkaline earth metal wherein the plasticizer further comprises a compound selected from the group consisting of hydrocarbon resins, liquid plasticizers other than the vegetable oil and the mixtures thereof; wherein the reinforcing filler comprises greater than 70 phr of a reinforcing inorganic filler.
[2] The rubber composition according to [1], wherein the vegetable oil is chosen from the group consisting of linseed oil, safflower oil, soybean oil, corn oil, cottonseed oil, turnip seed oil, castor oil, tung oil, pine oil, sunflower oil, palm oil, olive oil, coconut oil, groundnut oil, grapeseed oil, and mixtures thereof.
[3] The rubber composition according to [2], wherein the vegetable oil is sunflower oil.
[4] The rubber composition according to any one of [1] to [3], wherein the fatty acid from which the vegetable oil derives, comprises oleic acid in a weight fraction greater than or equal to 60%.
[5] The rubber composition according to any one of [1] to [4], wherein the microparticles have a median particle size by volume and a width of a volume particle size distribution, both of which are measured by laser diffraction methods in accordance with ISO standard 13320-1 and satisfy the following relations:
   - 50 µm < D₅₀ < 150 µm;
   - 0.50 < Span < 1.50;
   wherein:
   - D₅₀ is the medium particle size by volume corresponding to 50 % of a cumulative distribution obtained from the volume particle size distribution;
   - Span = (D₉₀ - D₁₀) / D₅₀; and
   - D₁₀ and D₉₀ are the particle size corresponding to 10 volume % and to 90 volume %, respectively, of the cumulative particle distribution.
[6] The rubber composition according to any one of [1] to [5], wherein the content of the microparticles is between 2 and 30 phr.
[7] The rubber composition according to any one of [1] to [6], wherein the alkali metal or the alkaline earth metal is chosen from the group consisting of sodium, potassium, magnesium, calcium and mixtures thereof.
[8] The rubber composition according to any one of [1] to [7], wherein the water soluble sulfate is chosen from the group consisting of magnesium sulfate, potassium sulfate and mixtures thereof.
[9] The rubber composition according to any one of [1] to [8], wherein the water soluble sulfate is magnesium sulfate.
[10] The rubber composition according to any one of [1] to [9], wherein the diene elastomer is chosen from the group consisting of natural rubber, synthetic polyisoprenes, polybutadienes, butadiene copolymers, isoprene copolymers and the mixtures thereof.
[11] The rubber composition according to [10], wherein the rubber composition comprises more than 50 phr of natural rubber or of synthetic polyisoprene.
[12] The rubber composition according to [10], wherein the rubber composition comprises more than 50 phr of polybutadiene having a content of cis-1,4 bonds of greater than 90%.
[14] The rubber composition according to any one of [1] to [12], wherein the reinforcing filler comprises greater than 60 phr of carbon black.
[15] The rubber composition according to any one of [1] to [14], wherein the content of the plasticizer is between 30 and 120 phr.
[16] The rubber composition according to [1], wherein the hydrocarbon resin exhibits a Tg greater than 20°C.
[17] The rubber composition according to [1] or [16], wherein the hydrocarbon resins are chosen from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins, and the mixtures of these resins.
[18] The rubber composition according to any one of [1] to [17], wherein the content of hydrocarbon resin is between 3 and 60 phr.
[19] The rubber composition according to [1], wherein the liquid plasticizers other than the vegetable oils, are chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, ether plasticizers, ester plasticizers, phosphate plasticizers, sulphonate plasticizers and the mixtures thereof.
[20] The rubber composition according to [19], wherein the content of liquid plasticizer is less than 20 phr.
[21] Use of a composition in accordance with any one of [1] to [20] for the manufacture of treads for pneumatic tires.
[22] A tread for a pneumatic tire comprising a composition in accordance with any one of [1] to [20].
[23] A pneumatic tire comprising the tread according to [22].

Another subject matter of the invention is the use of such a rubber composition in the manufacture of treads for tires, whether the treads are intended for new tires or for the retreading of worn tires.

Another subject matter of the invention is these treads and these tires themselves when they comprise a rubber composition according to the invention.

The tires of the invention are particularly intended to equip passenger motor vehicles, including 4×4 (four-wheel drive) vehicles and SUV (Sport Utility Vehicles) vehicles, two-wheel vehicles (in particular motorcycles), and also industrial vehicles in particular chosen from vans and heavy duty vehicles (i.e., underground, bus or heavy road transport vehicles (lorries, tractors, trailers), or off-road vehicles, such as agricultural vehicles or earthmoving equipment.

The invention and its advantages will be easily understood in the light of the description and implementation examples which follow.

### 4. DETAILED DESCRIPTION OF THE INVENTION

In the present description, unless expressly indicated otherwise, all the percentages (%) shown are % by weight. Moreover, any interval of values denoted by the expression "between a and b" represents the range of values extending from greater than a to less than b (that is to say, limits a and b excluded) whereas any interval of values denoted by the expression "from a to b" means the range of values extending from a up to b (that is to say, including the strict limits a and b).

The rubber composition of the invention is based on at least a diene elastomer, a reinforcing filler, a plasticizer comprising a vegetable oil, and microparticles of a water soluble sulfate of an alkali metal or an alkaline earth metal components which are described in detail hereinafter.

The expression "based on" should be understood in the present application to mean a composition comprising the mixture and/or the product of the reaction of the various constituents used, some of the constituents being able or intended to react together, at least partly, during the various manufacturing phases of the composition, in particular during the vulcanization (curing).

### 4-1. Diene elastomer

A "diene" elastomer (or "rubber", the two terms being considered to be synonymous) should be understood, in a known manner, to mean an (one or more is understood) elastomer resulting at least in part (i.e., a homopolymer or a copolymer) from diene monomers (monomers bearing two carbon-carbon double bonds which may or may not be conjugated).

These diene elastomers can be classified in a known way into two categories: those "essentially unsaturated" and those essentially saturated". Butyl rubbers, such as, for example copolymers of dienes and of α-olefins of EPDM type, come within the category of essentially saturated diene elastomers, having a content of units of diene origin which is low or very low, always less than 15% (mol %). In contrast, essentially unsaturated diene elastomer is understood to mean a diene elastomer resulting at least in part from conjugated diene monomers, having a content of units of diene origin (conjugated dienes) which is greater than 15% (mol %). In the category of "essentially unsaturated" diene elastomers, "highly unsaturated" diene elastomer is understood to mean in particular a diene elastomer having a content of units of diene origin (conjugated dienes) which is greater than 50%.

It is preferable to use at least one diene elastomer of the highly unsaturated type, in particular a diene elastomer chosen from the group consisting of polybutadienes (BR), synthetic polyisoprenes (IR), natural rubber (NR), butadiene copolymers, isoprene copolymers and mixtures of these elastomers. Such copolymers are more preferably chosen from the group consisting of butadiene/styrene copolymers (SBR), isoprene/butadiene copolymers (BIR), isoprene/styrene copolymers (SIR), isoprene/butadiene/styrene copolymers (SBIR) and mixtures of such copolymers.

The following are preferably suitable: polybutadienes, in particular those having a content of 1,2-units of between 4% and 80% or those having a content of cis-1,4 units of greater than 80%, polyisoprenes, butadiene/styrene copolymers in particular those having a styrene content of between 5% and 50% by weight and more particularly between 20% and 40%, a content of 1,2-bonds of the butadiene part of between 4% and 65% and a content of trans-1,4 bonds of between 20% and 80%, butadiene/isoprene copolymers, in particular those having an isoprene content of between 5% and 90% by weight and a glass transition temperature ("Tg"-measured according to ASTM D 3418 (1999)) of -40°C to -80°C, or isoprene/styrene copolymers, in particular those having a styrene content of between 5% and 50% by weight and a Tg of between -25°C and -50°C.

In the case of butadiene/styrene/isoprene copolymers, those having a styrene content of between 5% and 50% by weight and more particularly of between 10% and 40%, an isoprene content of between 15% and 60% by weight and more particularly between 20% and 50%, a butadiene content of between 5% and 50% by weight and more particularly of between 20% and 40%, a content of 1 ,2-units of the butadiene part of between 4% and 85%, a content of trans-1,4-units of the butadiene part of between 6% and 80%, a content of 1,2 plus 3,4-units of the isoprene part of between 5% and 70% and a content of trans-1,4-units of the isoprene part of between 10% and 50%, and more generally any butadiene/styrene/isoprene copolymer having a Tg of between -20°C and -70°C, are suitable in particular.

According to a particularly preferred embodiment of the invention, the diene elastomer is chosen from the group consisting of natural rubber, synthetic polyisoprenes, polybutadienes having a content of cis-1,4 bonds of greater than 90%, butadiene/styrene copolymers and the mixtures thereof.

According to a more particular and preferred embodiment, the diene elastomer used is predominantly, that is to say for more than 50 phr (it should be remembered that "phr" means parts by weight per 100 parts of elastomer), of natural rubber (NR) or a synthetic polyisoprene (IR). More preferably, the said natural rubber or synthetic polyisoprene is then used as a blend with a polybutadiene (BR) having a content of cis-1,4 bonds which is preferably greater than 90%.

According to another particular and preferred embodiment, the diene elastomer used is predominantly, that is to say for more than 50 phr, a polybutadiene (BR) having a content of cis-1,4 bonds of greater than 90%. More preferably, said polybutadiene is then used as a blend with natural rubber or a synthetic polyisoprene.

According to another particular and preferred embodiment, the diene elastomer used is a binary blend (mixture) of NR (or IR) and of BR, or a ternary blend of NR (or IR), BR and SBR. Preferably in the case of such blends, the composition comprises between 25 and 75 phr of NR (or IR) and between 75 and 25 phr of BR, with which may or may not be associated a third elastomer (ternary blend) at a content of less than 30 phr, in particular of less than 20 phr. This third elastomer is preferably an SBR elastomer, in particular a solution SBR ("SSBR"). More preferably still, in the case of such a blend, the composition comprises from 35 to 65 phr of NR (or IR) and from 65 to 35 phr of BR. The BR used is preferably a BR having a content of cis-1,4 bonds of greater than 90%, more preferably of greater than 95%.

Synthetic elastomers other than diene elastomers, indeed even polymers other than elastomers, for example thermoplastic polymers, might be combined, in a minor amount, with the diene elastomers of the compositions of the invention.

### 4-2. Reinforcing Filler

Use may be made of any type of reinforcing filler known for its capabilities of reinforcing a rubber composition which can be used for the manufacture of tires, for example an organic filler, such as carbon black, or a reinforcing inorganic filler, such as silica, with which a coupling agent is combined in a known way.

Such a reinforcing filler typically consists of nano particles, the mean size (by weight) of which is less than 500 nm, generally between 20 and 200 nm, in particular and preferably between 20 and 150 nm.

All carbon blacks, in particular blacks of the HAF, ISAF or SAF type, conventionally used in treads for tires ("tire-grade" blacks) are suitable as carbon blacks. Mention will more particularly be made, among the latter, of the reinforcing carbon blacks of the 100, 200 or 300 series (ASTM grades), such as, for example, the N115, N134, N234, N326, N330, N339, N347 or N375 blacks. The carbon blacks might, for example, be already incorporated in the isoprene elastomer in the form of a masterbatch (see, for example, Applications WO 97/36724 or WO 99/ 16600).

Mention may be made, as examples of organic fillers other than carbon blacks, of the functionalized polyvinyl organic fillers as described in Applications WO 2006/ 069792, WO 2006/069793, WO2008/003434 and WO2008/003435.

The term "reinforcing inorganic filler" should be understood here as meaning any inorganic or mineral filler, whatever its colour and its origin (natural or synthetic), also known as "white filler" or sometimes "clear filler" in contrast to carbon black, capable of reinforcing by itself, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (-OH) groups at its surface.

Mineral fillers of the siliceous type, in particular silica (SiO₂), or of the aluminous type, in particular alumina (Al₂O₃), are suitable in particular as reinforcing inorganic fillers. The silica used can be any reinforcing silica known to a person skilled in the art, in particular any precipitated or pyrogenic silica exhibiting a BET surface and a CTAB specific surface both of less than 450 m²/g, preferably from 30 to 400 m²/g, in particular between 60 and 300 m²/g. Mention will be made, as highly dispersible ("HD precipitated silicas"), for example, of the Ultrasil 7000 and Ultrasil 7005 silicas from Evonik, the Zeosil 1165 MP, 1135 MP and 1115 MP silicas from Rhodia, the Hi-Sil EZ150G silica from PPG, the Zeopol 8715, 8745 and 8755 silicas from Huber. Mention may be made, as examples of reinforcing aluminas, of the "Baikalox A125" or "Baikalox CR125" aluminas from Bai'kowski, the "APA-100RDX" alumina from Condea, the "Aluminoxid C" alumina from Degussa or the "AKP-G015" alumina from Sumitomo Chemicals.

Preferably, the content of total reinforcing filler (carbon black and/or reinforcing inorganic filler) is between 70 and 120 phr, in particular between 70 and 100 phr.

According to a specific embodiment, the reinforcing filler comprises predominantly an inorganic filler, in particular silica; in such a case, the inorganic filler, in particular silica, is present at a content of greater than 70 phr, in combination or not with carbon black in a minor amount; the carbon black, when it is present, is preferably used at a content of less than 20 phr, more preferably less than 10 phr (for example between 0.1 and 10 phr).

Independently of the first aspect of the invention, namely the search for optimized grip on melting ice, the predominant use of a reinforcing inorganic filler, such as silica, is also advantageous from the viewpoint of the grip on a wet or snowy ground surface.

According to another possible embodiment of the invention, the reinforcing filler comprises a blend of carbon black and of reinforcing inorganic filler such as silica, in similar amounts; in such a case, the content of inorganic filler, in particular silica, and the content of carbon black are preferably each between 70 and 75 phr,.

In order to couple the reinforcing inorganic filler to the diene elastomer, use is made, in a well-known way, of an at least bifunctional coupling agent (or bonding agent) intended to provide a satisfactory connection, of chemical and/or physical nature, between the inorganic filler (surface of its particles) and the diene elastomer. Use is made, in particular, of bifunctional organosilanes or polyorganosiloxanes.

Use is made in particular of silane polysulphides, referred to as "symmetrical" or "asymmetrical" depending on their specific structure, as described, for example, in Applications WO 03/002648 (or US 2005/016651) and WO 03/002649 (or US 2005/016650). "Symmetrical" silane polysulphides corresponding to the following general formula (I):
(I) Z - A - Sx - A - Z , in which:
   x is an integer from 2 to 8 (preferably from 2 to 5);
   A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);
   Z corresponds to one of the formulae below: 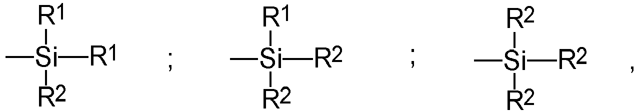
   in which:
      the R¹ radicals, which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl and/or ethyl),
      the R² radicals, which are unsubstituted or substituted and identical to or different from one another, represent a C₁-C₁₈ alkoxyl or C₅-C₁₈ cycloalkoxyl group (preferably a group chosen from C₁-C₈ alkoxyls and C₅-C₈ cycloalkoxyls, more preferably still a group chosen from C₁-C₄ alkoxyls, in particular methoxyl and ethoxyl), are suitable in particular, without the above definition being limiting. Mention will more particularly be made, as examples of silane polysulphides, of bis((C1-C4)alkoxyl(C1-C4)alkylsilyl(C1-C4)alkyl)polysulphides (in particular disulphides, trisulphides or tetrasulphides), such as, for example, bis(3-trimethoxysilylpropyl) or bis(3-triethoxysilylpropyl) polysulphides. Use is in particular made, among these compounds, of bis(3-triethoxysilylpropyl) tetrasulphide, abbreviated to TESPT, of formula [(C2H5O)3Si(CH2)3S2]2, or bis(triethoxysilylpropyl)disulphide, abbreviated to TESPD, of formula [(C2HSO)3Si(CH2)3S]2. Mention will also be made, as preferred examples, of bis(mono(C1-C4)alkoxyldi(C1-C4)alkylsilylpropyl)polysulphides (in particular disulphides, trisulphides or tetrasulphides), more particularly bis(monoethoxydimethylsilylpropyl) tetrasulphide, as described in Patent Application WO 02/083782 (or US 7 217 751).

Mention will in particular be made, as coupling agent other than alkoxysilane polysulphide, of bifunctional POSs (polyorganosiloxanes) or of hydroxysilane polysulphides (R² = OH in the above formula (I)), such as described in Patent Applications WO 02/30939 (or US 6 774 255) and WO 02/31041 (or US 2004/051210), or of silanes or POSs carrying azodicarbonyl functional groups, such as described, for example, in Patent Applications WO 2006/125532, WO 2006/125533 and WO 2006/125534.

In the rubber compositions in accordance with the invention, the content of coupling agent is preferably between 2 and 12 phr, more preferably between 3 and 8 phr.

### 4-3. Plasticizer

The rubber composition according to the present invention has the other essential characteristic of comprising between 20 and 160 phr of a plasticizer comprising from 20 to 55 phr of a vegetable oil. The vegetable oil is liquid at 20°C by definition.

The content of the essential plasticizer comprising the vegetable oil is preferably between 30 and 120 phr, more preferably between 40 and 100 phr, still more preferably between 50 and 80 phr, particularly from 55 to 70 phr. When the essential plasticizer is used in admixture with another essential plasticizer, the content should be understood to mean the total content of the two or more plasticizers.

Regarding the content of the vegetable (or plant) oil, below the indicated minimum, the targeted technical effect is insufficient. Wherein the indicated maximum, there is an issue of cost of the vegetable oil and a risk of worsening processability. For these reasons, the content of the vegetable oil is from 20 to 55 phr.

Mention may be made, as examples of the vegetable oil, of an oil selected from the group consisting of linseed oil, safflower oil, soybean oil, corn oil, cottonseed oil, turnip seed oil, castor oil, tung oil, pine oil, sunflower oil, palm oil, olive oil, coconut oil, groundnut oil and grapeseed oil, and mixtures of these oils. Sunflower oil is preferred.

The vegetable oil may be made up in large part of an unsaturated C₁₈ fatty acid, that is to say an unsaturated fatty acid chosen from the group consisting of oleic acid, linoleic acid, linolenic acid and the mixtures of these acids.

The vegetable oil is preferably rich in oleic acid, that is to say that the fatty acid (or all of the fatty acids if several are present) from which the vegetable oil derives, comprises oleic acid in a weight fraction at least equal to 60%, more preferably at least equal to 70%, still more preferably at least equal to 80% and particularly at least equal to 90%.

As the vegetable oil, use is advantageously made of a sunflower oil which is such that all of the fatty acids from which the vegetable oil derives comprise oleic acid in a weight fraction greater than or equal to 60%, preferably 70%, more preferably 80% and, according to one particularly advantageous embodiment of the invention, in a weight fraction greater than or equal to 90%.

Tg of the vegetable oil may be by definition less than -20°C, preferably less than - 40°C.

The plasticizer further comprises a compound selected from the group consisting of liquid plasticizers other than the vegetable oil, hydrocarbon resins and the mixture thereof.

The liquid plasticizers other than the vegetable oil are liquid at 20°C by definition, their role is to soften the matrix by diluting the elastomer and the reinforcing filler; their Tg is by definition less than -20°C, preferably less than -40°C.

Any extending oil, whether of aromatic or non-aromatic nature, any liquid plasticizing agent known for its plasticizing properties with regard to diene elastomers, can be used. At ambient temperature (20°C), these plasticizers or these oils, which are more or less viscous, are liquids (that is to say, as a reminder, substances that have the ability to eventually take on the shape of their container), as opposed, in particular, to plasticizing hydrocarbon resins which are by nature solid at ambient temperature.

The liquid plasticizers other than the vegetable oil chosen from the group consisting of polyolefinic oils, naphthenic oils (low or high viscosity, in particular hydrogenated or otherwise), paraffinic oils, DAE (Distillate Aromatic Extracts) oils, MES (Medium Extracted Solvates) oils, TDAE oils (Treated Distillate Aromatic Extracts), RAE (Residual Aromatic Extracts) oils, TRAE (Treated Residual Aromatic Extracts) oils, SRAE (Safety Residual Aromatic Extracts) oils, mineral oils, ether plasticizers, ester plasticizers, phosphate plasticizers, sulphonate plasticizers and the mixtures of these compounds are particularly suitable.

Mention may be made, as phosphate plasticizers for example, of those that contain between 12 and 30 carbon atoms, for example trioctyl phosphate.

As examples of ester plasticizers, mention may especially be made of the compounds chosen from the group consisting of trimellitates, pyromellitates, phthalates, 1,2-cyclohexane dicarboxylates, adipates, azelates, sebacates, and mixtures thereof.

The content of liquid plasticizers other than the vegetable oil is preferably 0 phr or less than 20 phr, more preferably less than 15 phr, still more preferably less than 10 phr, particularly at most 5 phr.

The hydrocarbon resins, which are solid plasticizers (at 20°C), exhibit a Tg of greater than +20°C, preferably greater than +30°C, such as is described, for example in Applications WO 2005/087859, WO 2006/061064 and WO 2007/017060.

The hydrocarbon resins are polymers well known to a person skilled in the art which are essentially based on carbon and hydrogen and thus miscible by nature in diene elastomer composition(s), when they are additionally described as being "plasticizing". They have been described, for example, in the work entitled "Hydrocarbon Resins" by R. Mildenberg, M. Zander and G. Collin (New York, VCH, 1997, ISBN 3-527-28617-9), chapter 5 of which is devoted to their applications, in particular in the tire rubber field (5.5. "Rubber Tires and Mechanical Goods"). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say that they comprise only carbon and hydrogen atoms.

Preferably, the hydrocarbon resins as being "plasticizing" exhibit at least one, more preferably all, of the following characteristics:
a Tg of greater than 20°C (more preferably between 40 and 100°C;
a number-average molecular weight (Mn) of between 400 and 2000 g/mol (more preferably between 500 and 1500g/mol); and
a polydispersity index (PI) of less than 3, more preferably less than 2 (reminder: PI = Mw/Mn with Mw the weight-average molecular weight).

The Tg is measured in a known way by DSC (Differential Scanning Calorimetry) according to Standard ASTM D3418 (1999). The macrostructure (Mw, Mn and PI) of the hydrocarbon resins are determined by steric exclusion chromatography (SEC): solvent tetrahydrofuran; temperature 35°C; concentration 1 g/l; flow rate 1 ml/min; solution filtered through a filter with a porosity of 0.45 µm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

According to a particularly preferred embodiment, the hydrocarbon resins as being "plasticizing" are chosen from the group consisting of cyclopentadiene (abbreviated to CPD) homopolymer or copolymer resins, dicyclopentadiene (abbreviated to DCPD) homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins and the mixtures thereof. Use is more preferably made, among the above copolymer resins, of those chosen from the group consisting of (D)CPD/vinylaromatic copolymer resins, (D)CPD/terpene copolymer resins, (D)CPD/C₅ fraction copolymer resins, (D)CPD/C₉ fraction copolymer resins, terpene/vinylaromatic copolymer resins, terpene/phenol copolymer resins, C₅ fraction/vinyl-aromatic copolymer resins, C₉ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a C₉ fraction (or more generally from a C₈ to C₁₀ fraction) are suitable, for example, as vinylaromatic monomer. Preferably, the vinylaromatic compound is styrene or a vinylaromatic monomer resulting from a C₉ fraction (or more generally from a C₈ to C₁₀ fraction). Preferably, the vinylaromatic compound is the minor monomer, expressed as molar fraction, in the copolymer under consideration.

The content of hydrocarbon resins is preferably between 3 and 60 phr, more preferably between 5 and 50 phr, still more preferably between 10 and 40 phr, particularly from 15 to 35 phr.

### 4-4. Water soluble Sulphate Microparticles

The rubber compositions of the invention have the other essential characteristic of comprising between 2 and 40 phr of microparticles of a water soluble sulphate of an alkali metal or an alkalie earth metal.

Water solubility or solubility in water (it should be remembered that maximum weight of dissolved substance in water at given one temperature and one pressure) is one of basically well-known and constant physics (in particular, available in the "Handbooks of Chemistry and Physic") of the compounds which are organic or inorganic.

The person skilled art in the art understands that the microparticles of the water soluble sulphate can dissolve at least partly in water. Preferably, the solubility of the microparticles in water at 0 °C under a pressure equal to 1 atm is higher than 1 g/100ml, more preferably higher than 2 g/100ml, still more preferably higher than 4 g/100ml.

According to a preferred embodiment, the alkali metal or the alkaline metal is chosen from the group consisting of sodium (Na), potassium (K), magnesium (Mg), calcium (Ca) and the mixture thereof.

According to a more preferred embodiment, the water soluble sulfate is chosen from the group consisting of magnesium sulfate, potassium sulfate and the mixture thereof. Still more preferably, the water soluble sulfate is magnesium sulfate.

According to a preferable embodiment, the microparicles have a specific median particle size by volume (D₅₀) and a specific width of a volume particle size distribution (Span), both of which are measured by laser particle size methods in accordance with ISO standard 13320-1 and satisfy the following relations:
- 50 µm < D₅₀ < 150 µm;
- 0.50 < Span < 1.50;

The D₅₀ is the median particle size (diameter) by volume corresponding to 50 (volume) % of a cumulative distribution obtained from the volume particle size distribution, that is to say, particle size by volume, 50% of the microparticles have smaller diameter(s) than D₅₀, and another 50% of the microparticles have larger diameter(s) than D₅₀. It is preferred that the D₅₀ is between 75 and 125 µm in order to optimally compromise between a desired surface roughness and a suitable contact between the rubber composition and the ice.

The Span which is the width of the volume particle size distribution is measured in a way known and is defined according to the following equation:
- Span = (D₉₀ - D₁₀) / D₅₀;

Preferably, the Span is between 0.75 and 1.25.
wherein:
D₁₀ and D₉₀ are diameters (particle sizes) of the microparticles corresponding to 10 (volume) % and to 90 (volume)%, respectively, of the cumulative distribution.

According to another preferred embodiment, the D₁₀ is greater than 30 µm, more preferably greater than 40 µm, in particular greater than 50 µm.

According to another preferred embodiment combined or not with the previous embodiment, the D₉₀ is less than 180 µm, more preferably less than 160 µm, in particular less than 150 µm.

Moreover, in order to obtain an optimal compromise among the targeted technical effect (the creation of a suitable micro-roughness), the grip performance on melting ice and cost, the content of the microparticles in the rubber composition according to the present invention is preferably between 2 and 30 phr, more preferably between 5 and 20 phr.

The particle size distribution by volume (that is, volume particle distribution) is characterized in a known manner with a laser particle size analyzer in accordance with ISO 13320-1 (1999) unless expressly indicated otherwise.

A laser diffraction particle size analyzer, which is "Partica LA-950V2" equipped with its data processing software (P2000074001H version 4.11), provided by HORIBA Co., Ltd. is used. The programming parameters of the measurement are as follows: Use of the Fraunhofer model; no preliminary sample treatment with ultrasound; circulation velocity in the tank: 6 (corresponding to about 1400 revolutions / min); stirring speed in the cell: 6 (that is, about 2300 revolutions / min); red laser (650 nm); focal length from the object: 450 mm; preliminary alignment control of the laser and measurement of background noise (the tank with ethanol).

A suspension of the sample to be tested is prepared at first: for this purpose, about 500 mg of the sample is put in an empty beaker (volume about 100 ml), a few guttae of ethanol titrated at 95° is then utilized to moisturize the sample and to form a paste having the consistency of a toothpaste; finally, 40 ml of ethanol is added to this preparation which is then stirred with a bar magnet and a magnetic stirrer (magnetic stirrer IKA® "RET BASIC", graduation 750) during about 15 seconds.

Then the suspension obtained is injected little by little, with a pipette, in the tank of the preparation of the particle size analyzer initially filled with 95° ethanol (low level, that is, about 180 ml), to an obscuration level of the measurement cell, displayed on the apparatus, between 15% and 20% (corresponding to the optimum concentration).

The measurement is performed just after stabilization of the obscuration level, with three successive measurements on the same preparation for a repeatability control. In order to validate this first measurement, a new preparation (suspension) is made and analyzed according to the same protocol: the two measurements must be identical (reproducibility in accordance with the recommendations of the standard). After each preparation and measurement, and the cell and the tank for the preparation in the laser particle size analyzer are rinsed twice with demineralized water.

The recorded data is ultimately used by the software that delivers the volume particle size distribution curve and the desired characteristics of the volume distribution (D₁₀, D₅₀, D₉₀ and Span).

### 4-5. Various Additives

The rubber compositions of the invention also comprise all or a portion of the usual additives generally used in the elastomer compositions intended for the manufacture of treads for tires, in particular for winter tires, such as, for example, protection agents, such as antiozone waxes, chemical antiozonants, antioxidants, reinforcing resins, methylene acceptors (for example phenolic novolak resin) or methylene donors (for example HMT or H3M), a crosslinking system based either on sulphur or on donors of sulphur and/or per oxide and/or bismaleimides, vulcanization accelerators, or vulcanization activators.

These compositions can also comprise coupling activators when a coupling agent is used, agents for covering the inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyor ganosiloxanes.

### 4-6. Manufactures of the Rubber Compositions and of the Treads

The rubber compositions of the invention are manufactured in appropriate mixers using two successive preparation phases according to a general procedure well known to a person skilled in the art: a first phase of thermomechanical working or kneading (sometimes described as "non-productive" phase) at high temperature, up to a maximum temperature of between 130°C and 200°C, preferably between 145°C and 185°C, followed by a second phase of mechanical working (sometimes described as "productive" phase) at a lower temperature, typically of less than 120°C, for example between 60°C and 100°C, finishing phase during which the crosslinking or vulcanization system is incorporated.

A process which can be used for the manufacture of such compositions comprises, for example and preferably, the following steps:
incorporating in the diene elastomer, in a mixer, the reinforcing filler, the plasticizer comprising the vegetable oil, the microparticles, during a first stage ("non productive" stage) everything being kneaded thermomechanically, in one or more goes, until a maximum temperature of between 130°C and 200°C is reached;
cooling the combined mixture to a temperature of less than 100°C;
subsequently incorporating, during a second stage ("productive" stage), a crosslinking system;
kneading everything up to a maximum temperature of less than 120°C;
extruding or calendering the rubber composition thus obtained, in particular in the form of a tire tread.

By way of example, the first (non-productive) phase is carried out in a single thermomechanical stage during which all the necessary constituents, the optional additional covering agents or processing aids, and various other additives, with the exception of the crosslinking system, are introduced into an appropriate mixer, such as a normal internal mixer. After cooling the mixture thus obtained during the first non-productive phase, the crosslinking system is then incorporated at low temperature, generally in an external mixer, such as an open mill; everything is then mixed (the second (productive) phase) for a few minutes, for example between 5 and 15 min.

The crosslinking system proper is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 3.0 phr, and that of the primary accelerator is preferably between 0.5 and 5.0 phr.

Use may be made, as accelerator (primary or secondary) of any compound capable of acting as accelerator of the vulcanization of diene elastomers in the presence of sulphur, in particular accelerators of the thiazoles type and their derivatives, accelerators of thiurams types, or zinc dithiocar bamates. These accelerators are more preferably chosen from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-ben zothiazolesulphenamide ("TBBS"), N-tert-butyl-2 benzothiazolesulphenimide ("TBSI"), zinc dibenzyldithiocarbamate ("ZBEC"), Tetrabenzylthiuram disulfide ("TBZTD") and the mixtures thereof.

The final composition thus obtained is subsequently calendered, for example in the form of a sheet or of a plaque, in particular for laboratory characterization, or else extruded in the form of a rubber profiled element which can be used directly as winter tire tread.

The vulcanization (or curing) is carried out in a known way at a temperature generally of between 130°C and 200°C for a sufficient time which can vary, for example, between 5 and 90 min depending in particular on the curing temperature, the vulcanization system adopted and the vulcanization kinetics of the composition under consideration.

The rubber compositions according to the invention can constitute all or a portion only of the tread in accordance with the invention, in the case of a tread of composite type formed from several rubber compositions of different formulations.

The invention relates to the rubber compositions and to the treads described above, both in the raw state (i.e., before curing) and in the cured state (i.e., after crosslinking or vulcanization).

The invention is further illustrated by the following non-limiting examples.

### 5. EXAMPLES OF THE IMPLEMENTATION OF THE INVENTION

### 5.1 Preparation of the Rubber Compositions and of the Treads

The tests which follow were carried out in the following way: the reinforcing filler (for example a reinforcing inorganic filler, such as silica, and its associated coupling agent), the plasticizer, the microparticles, the diene elastomer (or blend of diene elastomers) and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 30°C, everything being mixed (productive phase) for an appropriate time (for example between 5 and 12 min).

The compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

### 5.2 Friction tests

In these tests, five compositions (identified as C-1, C-2, C-3, C-4 and C-5) based on diene elastomers (BR and NR blend comprising a content of cis-1,4 bonds of greater than 95%) are compared, the five compositions are reinforced with a blend of silica and carbon black, and comprise plasticizers with/without 55 or 20 phr an oleic sunflower oil (as a vegetable oil) which is or is not combined with a fraction (10 phr) of magnesium sulphate microparticles (as microparticles of a water soluble sulfate of an alkali metal or an alkaline earth metal), the microparticles obtained with a suitable filtering as shown in WO 2012/052331 A and having a specific volume distribution defined by D50, Span (also D10 and D90) measured by a laser diffraction method (with "Partica LA-950V2" equipped with its data processing software (P2000074001H version 4.11), provided by HORIBA Co., Ltd.) in accordance with ISO 13320-1:
Composition C-1: composition without the vegetable oil and without the microparticles (a reference);
Composition C-2: composition without the vegetable oil but with the microparticles (a comparative example);
Composition C-3: composition without the vegetable oil but with the microparticles (another comparative example);
Composition C-4: composition according to the present invention with 55 phr of the vegetable oil and with the microparticles;
Composition C-5: composition according to the present invention with 20 phr of the vegetable oil and with the microparticles;

The formulations of the five compositions (Table 1 - contents of the various products expressed in phr), and their ice friction results are given in Tables 1 and 2; the vulcanization system is composed of sulphur and sulphenamide.

These five compositions were subjected to a laboratory test consisting in measuring their friction coefficients on ice. The principle is based on a block of rubber composition that slides at a given speed (for example equal to 5 km/h) over an ice track with an imposed load (for example equal to 3 kg/cm²). The forces generated in the direction of travel (Fx) of the block and perpendicular to the travel (Fz) are measured. The Fx/Fz ratio determines the friction coefficient of the test specimen on the ice. The temperature during the measurement is set at -2°C. The surface of block of rubber composition in accordance with the invention, which contacted on the ice, had been cut a thin slice of the rubber by approximately 0.5mm before the friction test in order to expose the microparticles at the surface.

This test, the principle of which is well known to a person skilled in the art (see, for example, patent applications EP 1 052 270 and EP 1 505 112), makes it possible to evaluate, under representative conditions, the grip on the ice within the temperature of range between 0°C and -5°C which would be obtained after a running test on a vehicle fitted with tires whose tread is composed of the same rubber compositions.

The results are expressed in Table 2. A value above that of the reference (composition C-1), arbitrarily set at 100, indicates an improved result, that is to say an aptitude for shorter braking distance, that is, the higher value, the better the ice grip. It is observed in this Table 2 that the compositions C-4 and C-5 in accordance with the present invention has a marked or certain increase in the friction coefficient at -2°C, relative to the reference composition C-1 and the comparative examples C-2 and C-3.

### 5.3 Dynamic properties

Each of the above five compositions were tested in order to measure their dynamic properties on a viscosity (Metravib VA4000) according to Standard ASTM D5992-96. The response of a sample of vulcanized composition (cylindrical test specimen with a thickness of 4 mm and with a cross section of 400 m2), subjected to a simple alternating sinusoidal shear stress, at a frequency of 10 Hz, during a temperature sweep, under a stationary stress of 0.7MPa, was recorded; the tan(δ) value observed at 0°C was recorded. It should be remembered that, in a way well known to a person skilled in the art, a ratio of the tan(δ)_{0°C} of the examples (or the comparative examples) to the reference, arbitrarily set at 100, is representative of the grip potential on wet roads: the higher ratio, the better wet grip than that of the reference.

The results of the ratios are expressed in Table 2. It is found that the composition C-5 in accordance with the present invention exhibits the value which is markedly greater than that of the reference composition C-1 and the comparative examples C-2 and C-3. Another example composition C-4 has the equivalent values to that of the reference C-1, the comparative examples C-2 and C-3 in the wet grip point of view.

In conclusion, the results of the tests commented above show that the rubber composition in accordance with the present invention having a plasticizer comprising a vegetable oil and microparticles of a water soluble sulfate of an alkali metal or an alkaline earth metal, gives the tires and their treads a better ice grip performance, especially melting ice grip performance, while maintaining or even improving a wet grip performance of the tire.

**Table 1**

| Rubber Composition No.: | Ref. | Comparative examples | | Examples of the invention | |
|---|---|---|---|---|---|
| | C-1 | C-2 | C-3 | C-4 | C-5 |
| BR (1) | 60 | 60 | 60 | 60 | 60 |
| NR (2) | 40 | 40 | 40 | 40 | 40 |
| Silica (3) | 80 | 80 | 80 | 80 | 80 |
| Coupling agent (4) | 5 | 5 | 5 | 5 | 5 |
| Carbon black (5) | 5 | 5 | 5 | 5 | 5 |
| MES oil (6) | 55 | 55 | | | |
| TDAE oil (7) | | | 55 | | |
| Vegetable oil (8) | | | | 55 | 20 |
| Hydrocarbon resin (9) | 15 | 15 | 15 | 15 | 35 |
| Microparticles (10) | | 10 | 10 | 10 | 10 |
| ZnO | 1.2 | 1.2 | 1.2 | 1.2 | 1.2 |
| Stearic acid | 1 | 1 | 1 | 1 | 1 |
| Antiozone wax | 1.5 | 1.5 | 1.5 | 1.5 | 1.5 |
| Antioxidant (11) | 2 | 2 | 2 | 2 | 2 |
| DPG (12) | 1.5 | 1.5 | 1.5 | 1.5 | 1.5 |
| Sulphur | 2 | 2 | 2 | 2 | 2 |
| Accelerator (13) | 1.7 | 1.7 | 1.7 | 1.7 | 1.7 |

| | | | | | |
|---|---|---|---|---|---|
| (1) BR with 0.3% of 1,2; 2.7%-1,4 of trans; 97% of cis-1,4 (Tg = -104°C); (2) Natural rubber (peptised); (3) Silica "Zeosil1165MP" from Rhodia, " (CTAB, BET: about 160 m²/g); (4) Coupling agent TESPT ("Si69" from Evonik); (5) Grade ASTM N234 (Cabot); (6) MES oil ("Catenex SNR" from Shell) (7) TDAE oil ("VivaTec 500" from H&R) (8) Oleic sunflower oil ("Agripure 80" from Cargiil, Weight percent oleic acid: 100%); (9) Hydrocarbon resin C5/C9 type ("Escorez ECR-373" from Exxon); (10) Magnesium sulfate (filtering "MG-OK" from Ako Kasei, D10: 52 µm, D50: 84 µm, D90: 140 µm and Span: 1.05 µm measured by laser diffraction methods in accordance with ISO13320-1); (11) N-(1,3-dimethylbutyl)-N-phenyl-para-phenylenediamine ("Santoflex 6-PPD" from Flexsys); (12) Diphenylguanidine ("Perkacit DPG" from Flexsys); (13) N-dicyclohexyl-2-benzothiazolesulphenamide ("Santocure CBS" from Flexsys). | | | | | |

**Table 2**

| Rubber Composition No.: | Ref. | Comparative examples | | Examples of the invention | |
|---|---|---|---|---|---|
| | C-1 | C-2 | C-3 | C-4 | C-5 |
| Melting ice grip⁽¹⁾ | 100 | 111 | 113 | 131 | 114 |
| Wet grip Index⁽²⁾ | 100 | 100 | 100 | 100 | 122 |

| | | | | | |
|---|---|---|---|---|---|
| (1) Friction test on icy road (at -2 °C) (2) Tan(δ)[at 0°C, 10Hz, 0.7MPa, C-n]/Tan(δ)[at 0°C, 10Hz, 0.7MPa, C-1] × 100; where: n=1, 2, 3, 4 and 5 | | | | | |

## Claims

1. A rubber composition comprising at least:
- a diene elastomer;
- between 70 and 150 phr of a reinforcing filler;
- between 20 and 160 phr of a plasticizer comprising from 20 to 55 phr of a vegetable oil; and
- between 2 and 40 phr of microparticles of a water soluble sulfate of an alkali metal or an alkaline earth metal,
wherein the plasticizer further comprises a compound selected from the group consisting of hydrocarbon resins, liquid plasticizers other than the vegetable oil and the mixtures thereof;
wherein the reinforcing filler comprises greater than 70 phr of a reinforcing inorganic filler.

2. The rubber composition according to Claim 1, wherein the vegetable oil is chosen from the group consisting of linseed oil, safflower oil, soybean oil, corn oil, cottonseed oil, turnip seed oil, castor oil, tung oil, pine oil, sunflower oil, palm oil, olive oil, coconut oil, groundnut oil, grapeseed oil, and mixtures thereof, preferably sunflower oil.

3. The rubber composition according to Claim 1 or Claim 2, wherein the microparticles have a median particle size by volume and a width of a volume particle size distribution, both of which are measured by laser diffraction methods in accordance with ISO standard 13320-1 and satisfy the following relations:
- 50 µm < D₅₀ < 150 µm;
- 0.50 < Span < 1.50;
wherein:
- D₅₀ is the medium particle size by volume corresponding to 50 % of a cumulative distribution obtained from the volume particle size distribution;
- Span = (D₉₀ - D₁₀) / D₅₀; and
- D₁₀ and D₉₀ are the particle size corresponding to 10 volume % and to 90 volume %, respectively, of the cumulative particle distribution.

4. The rubber composition according to any one of Claims 1 to 3, wherein the alkali metal or the alkaline earth metal is chosen from the group consisting of sodium, potassium, magnesium, calcium and mixtures thereof.

5. The rubber composition according to any one of Claims 1 to 4, wherein the water soluble sulfate is chosen from the group consisting of magnesium sulfate, potassium sulfate and mixtures thereof.

6. The rubber composition according to any one of Claims 1 to 5, wherein the water soluble sulfate is magnesium sulfate.

7. The rubber composition according to any one of Claims 1 to 6, wherein the diene elastomer is chosen from the group consisting of natural rubber, synthetic polyisoprenes, polybutadienes, butadiene copolymers, isoprene copolymers and the mixtures thereof.

8. The rubber composition according to any one of Claims 1 to 7, wherein the hydrocarbon resins are chosen from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins, and the mixtures of these resins.

9. The rubber composition according to any one of Claims 1 to 8, wherein the content of hydrocarbon resin is between 3 and 60 phr.

10. The rubber composition according to anyone of Claims 1 to 9, wherein the liquid plasticizers other than the vegetable oils, are chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, ether plasticizers, ester plasticizers, phosphate plasticizers, sulphonate plasticizers and the mixtures thereof, preferably the content of liquid plasticizer of less than 20 phr.

11. The rubber composition according to any one of Claims 1 to 10, wherein the hydrocarbon resins exhibit a Tg greater than 20°C.

12. Use of a composition in accordance with any one of Claims 1 to 11 for the manufacture of treads for pneumatic tires.

13. A tread for a pneumatic tire comprising a composition in accordance with any one of Claims 1 to 11.

14. A pneumatic tire comprising the tread according to Claim 13.

## Patentansprüche

1. Gummizusammensetzung, umfassend wenigstens:
- ein Dienelastomer;
- Zwischen 70 und 150 phr eines Verstärkungs-Füllstoffs;
- zwischen 20 und 160 phr eines Weichmachers, umfassend von 20 bis 55 phr eines Pflanzenöls; und
- zwischen 2 und 40 phr Mikropartikel eines wasserlöslichen Sulfats eines Alkalimetalls oder eines alkalischen Erdmetalls,
wobei der Weichmacher weiterhin umfasst eine Mischung, die ausgewählt ist aus der Gruppe, bestehend aus Kohlenwasserstoff-Harzen, flüssigen Weichmachern, die keine Pflanzenöle sind, und die Mischungen davon;
wobei der Verstärkungs-Füllstoff mehr als 70 phr eines anorganischen Verstärkungs-Füllstoffs umfasst.

2. Gummizusammensetzung gemäß Anspruch 1, wobei das Pflanzenöl ausgewählt ist aus der Gruppe bestehend aus Leinsamenöl, Diestelöl, Sojaöl, Maisöl, Baumwollsamenöl, Rübensaatöl, Rizinusöl, Tungöl, Pinienöl, Sonnenblumenöl, Palmöl, Olivenöl, Kokosnussöl, Erdnussöl, Traubenkernöl und Mischungen davon, bevorzugt Sonnenblumenöl.

3. Gummizusammensetzung gemäß Anspruch 1 oder Anspruch 2, wobei die Mikropartikel eine mediane Partikelgröße nach Volumen und eine Verteilungsbreite einer Volumen-Partikelgröße aufweisen, von denen beide per Laserbeugungs-Verfahren gemäß der ISO-Norm 13320-1 gemessen werden und den folgenden Relationen genügen:
- 50 µm < D₅₀ < 150 µm;
- 0,50 < Span < 1,50;
wobei:
- D₅₀ ist die mittlere Partikelgröße nach Volumen, die 50 % einer kumulativen Verteilung entspricht, die aus der Volumenverteilung der Partikelgröße erhalten ist;
- Span = (D₉₀ - D₁₀) / D₅₀; und
- D₁₀ und D₉₀ die Partikelgrößen sind, die jeweils 10 Volumen-% und 90 Volumen-% der kumulativen Partikelverteilung entsprechen.

4. Gummizusammensetzung gemäß irgendeinem der Ansprüche 1 bis 3, wobei das Alkalimetall oder das alkalische Erdmetall aus der Gruppe ausgewählt ist, bestehend aus Natrium, Kalium, Magnesium, Kalzium und Mischungen davon.

5. Gummizusammensetzung gemäß irgendeinem der Ansprüche 1 bis 4, wobei das wasserlösliche Sulfat aus der Gruppe ausgewählt ist, bestehend aus Magnesiumsulfat, Kaliumsulfat und Mischungen davon.

6. Gummizusammensetzung gemäß irgendeinem der Ansprüche 1 bis 5, wobei das wasserlösliche Sulfat Magnesiumsulfat ist.

7. Gummizusammensetzung gemäß irgendeinem der Ansprüche 1 bis 6, wobei das Dienelastomer aus der Gruppe ausgewählt ist, bestehend aus Naturgummi, synthetischen Polyisoprenen, Polybutadienen, Butadien-Kopolymeren, Isopren-Kopolymeren und den Mischungen davon.

8. Gummizusammensetzung gemäß irgendeinem der Ansprüche 1 bis 7, wobei die Kohlenwasserstoff-Harze aus der Gruppe ausgewählt sind, bestehend aus Cyclopentadien-Homopolymer oder Kopolymerharzen, Dicyclopentadien-Homopolymer oder Kopolymerharzen, Terpen-Homopolymer oder Kopolymerharzen, C₅-Bruchteil von Homopolymer- oder Kopolymer-Harzen, Cg-Bruchteil von Homopolymer- oder Kopolymerharzen, Alpha-Methylstyrolhomopolymer oder -kopolymerharzen und den Mischungen dieser Harze.

9. Gummizusammensetzung gemäß irgendeinem der Ansprüche 1 bis 8, wobei der Gehalt an Kohlenwasserstoff-Harz zwischen 3 und 60 phr beträgt.

10. Gummizusammensetzung gemäß irgendeinem der Ansprüche 1 bis 9, wobei die flüssigen Weichmacher, die keine Pflanzenöle sind, aus der Gruppe ausgewählt sind, bestehend aus polyolefinischen Ölen, naphthenischen Ölen, paraffinischen Ölen, Aromatenextrakten aus Destillat-Ölen (DAE-Ölen), Mediumextrakten aus Lösungsmittel-Ölen (MES-Ölen), Verarbeiteten Aromatenextrakten aus Destillat-Ölen (TDAE-Ölen), Aromatenextrakten aus Rückstands-Ölen (RAE-Ölen), Verarbeiteten Aromatenextrakten aus Rückstandsölen (TDAE-Ölen), Aromatenextrakten aus Sicherheitsrückstands-Ölen (SRAE-Ölen), Mineralölen, Äther-Weichmachern, Phosphat-Weichmachern, Sulphonat-Weichmachern und deren Mischungen, bevorzugt dem Inhalt von flüssigen Weichmachern mit weniger als 20 phr.

11. Gummizusammensetzung gemäß irgendeinem der Ansprüche 1 bis 10, wobei die Kohlenwasserstoff-Harze einen Tg größer als 20 °C aufweisen.

12. Verwendung einer Zusammensetzung gemäß irgendeinem der Ansprüche 1 bis 11 für die Herstellung von Laufflächen für Luftreifen.

13. Lauffläche für einen Luftreifen, umfassend eine Zusammensetzung gemäß irgendeinem der Ansprüche 1 bis 11.

14. Luftreifen, umfassend die Lauffläche gemäß Anspruch 13.

## Revendications

1. Composition de caoutchouc comprenant au moins :
- un élastomère de diène ;
- entre 70 et 150 pce d'une charge de renforcement ;
- entre 20 et 160 pce d'un plastifiant comprenant de 20 à 55 pce d'une huile végétale ; et
- entre 2 et 40 pce de microparticules d'un sulfate d'un métal alcalin ou d'un métal alcalino-terreux soluble dans l'eau,
dans laquelle le plastifiant comprend en outre un composé sélectionné dans le groupe constitué par les résines d'hydrocarbures, les plastifiants liquides autres que l'huile végétale et les mélanges de ceux-ci ;
dans laquelle la charge de renforcement comprend plus de 70 pce d'une charge inorganique de renforcement.

2. Composition de caoutchouc selon la revendication 1, dans laquelle l'huile végétale est choisie dans le groupe constitué par l'huile de lin, l'huile de carthame, l'huile de soja, l'huile de maïs, l'huile de coton, l'huile de graine de navet, l'huile de ricin, l'huile de bois de Chine, l'huile de pin, l'huile de tournesol, l'huile de palme, l'huile d'olive, l'huile de noix de coco, l'huile d'arachide, l'huile de pépins de raisin, et les mélanges de celles-ci, de préférence est de l'huile de tournesol.

3. Composition de caoutchouc selon la revendication 1 ou la revendication 2, dans laquelle les microparticules présentent une taille de particule moyenne en volume et une largeur d'une distribution de taille de particule en volume, dont les deux sont mesurées par des procédés de diffraction laser conformément à la norme ISO 13320-1 et satisfont aux relations suivantes :
- 50 µm < D₅₀ < 150 µm ;
- 0,50 < Span < 1,50 ;
dans laquelle :
- D₅₀ est la taille de particule moyenne en volume correspondant à 50 % d'une distribution cumulée obtenue à partir de la distribution de taille de particule en volume ;
- Span = (D₉₀ - D₁₀)/D₅₀ ; et
- D₁₀ et D₉₀ sont respectivement la taille de particule correspondant à 10 % en volume et à 90 % en volume de la distribution de particule cumulée.

4. Composition de caoutchouc selon l'une quelconque des revendications 1 à 3, dans laquelle le métal alcalin ou le métal alcalino-terreux est choisi dans le groupe constitué par le sodium, le potassium, le magnésium, le calcium et les mélanges de ceux-ci.

5. Composition de caoutchouc selon l'une quelconque des revendications 1 à 4, dans laquelle le sulfate soluble dans l'eau est choisi dans le groupe constitué par le sulfate de magnésium, le sulfate de potassium et les mélanges de ceux-ci.

6. Composition de caoutchouc selon l'une quelconque des revendications 1 à 5, dans laquelle le sulfate soluble dans l'eau est du sulfate de magnésium.

7. Composition de caoutchouc selon l'une quelconque des revendications 1 à 6, dans laquelle l'élastomère de diène est choisi dans le groupe constitué par le caoutchouc naturel, les polyisoprènes synthétiques, les polybutadiènes, les copolymères de butadiène, les copolymères d'isoprène et les mélanges de ceux-ci.

8. Composition de caoutchouc selon l'une quelconque des revendications 1 à 7, dans laquelle les résines d'hydrocarbures sont choisies dans le groupe constitué par les résines de copolymères ou d'homopolymères de cyclopentadiène, les résines de copolymères ou d'homopolymères de dicyclopentadiène, les résines de copolymères ou d'homopolymères de terpène, les résines de copolymères ou d'homopolymères de fraction C₅, les résines de copolymères ou d'homopolymères de fraction C₉, les résines de copolymères ou d'homopolymères d'alpha-méthylstyrène, et les mélanges de ces résines.

9. Composition de caoutchouc selon l'une quelconque des revendications 1 à 8, dans laquelle la teneur en résine d'hydrocarbures est entre 3 et 60 pce.

10. Composition de caoutchouc selon l'une quelconque des revendications 1 à 9, dans laquelle les plastifiants liquides autres que les huiles végétales sont choisis dans le groupe constitué par les huiles polyoléfines, les huiles naphténiques, d'huiles paraffiniques, les huiles d'extraits aromatiques de distillat (DAE), les huiles de solvates extraits intermédiaires (MES),les huiles d'extraits aromatiques de distillat traité (TDAE), les huiles d'extraits aromatiques résiduels (RAE), les huiles d'extraits aromatiques résiduels traités (TRAE), les huiles d'extraits aromatiques résiduels de sécurité (SRAE), les huiles minérales, les plastifiants d'éther, les plastifiants d'ester, les plastifiants de phosphate, de plastifiants de sulfonate et les mélanges de ceux-ci, la teneur en plastifiant liquide étant de préférence inférieure à 20 pce.

11. Composition de caoutchouc selon l'une quelconque des revendications 1 à 10, dans laquelle les résines d'hydrocarbures présentent une Tg de plus de 20 °C.

12. Utilisation d'une composition conformément à l'une quelconque des revendications 1 à 11 pour la fabrication de bandes de roulement pour bandages pneumatiques.

13. Bande de roulement pour un bandage pneumatique comprenant une composition conformément à l'une quelconque des revendications 1 à 11.

14. Bandage pneumatique comprenant la bande de roulement selon la revendication 13.
